# EUROPEAN PATENT SPECIFICATION

(11) **EP 2 078 672 B1**
(45) Date of publication and mention of the grant of the patent: **02.01.2013**
(21) Application number: 08150193.4
(22) Date of filing: 11.01.2008
(51) Int. Cl.: B64C 13/04, B64C 25/44, B64C 25/50, B64C 39/02, B64D 31/04

(54) **System, method and apparatus for ground-based manipulation and control of aerial vehicle during non-flying operations**
System, Verfahren und Vorrichtung zur erdgebundenen Bewegung und Steuerung eines Luftfahrzeugs im nicht-fliegenden Betrieb
Système, procédé et appareil pour la manipulation terrestre et le contrôle d'un véhicule aérien pendant des opérations au sol

(30) Priority: 11.01.2008 US 884544 P
(43) Date of publication of application: 15.07.2009
(73) Proprietor: Lockheed Martin Corporation, Bethesda, Maryland 20817 (US)
(72) Inventor: Renschaw, Kevin J., Fort Worth, TX 76135 (US)
(74) Representative: McCall, John Douglas

(56) References cited:
- US-A- 3 443 453
- US-A- 4 008 868
- US-B1- 6 264 146

## Description

### 1. Technical Field

The present invention relates in general to aircraft and, in particular, to an improved system, method, and apparatus for controlling, repositioning, and maneuvering aerial vehicles while they are not flying.

### 2. Description of the Related Art

The United States Air Force and Navy have interest in operating unmanned aerial vehicles (UAV). There are a variety of systems for guiding UAVs during flight. However, once a UAV is on the ground (i.e., not flying), it is also necessary to safely taxi it, move it around parking areas, and reposition it in a manner similar to how manned aircraft are relocated. These operations are particularly difficult to perform on the deck of an aircraft carrier at sea. For example, a Navy UAV must move out of the landing area after a successful arrested landing on a carrier, be relocated (i.e., "spotted") at various places on the deck, and steered precisely into the launching catapult station. Worse yet, there is very little on an aircraft carrier deck for mistakes or from desired taxi paths.

There have been a few proposed solutions for control or guidance systems for operating UAVs while they are on the ground. For example, several solutions using wireless remote control devices have been proposed to steer UAVs while they are on the ground. These devices suggest the use or either RF or IR signals to be transmitted from dedicated units. The devices may be by ground personnel or in a control station. Hard-wired control devices that would be directly connected to UAVs also have been proposed. However, all of these systems are still experimental and none are currently in service.

Unfortunately, remote control units such as those described above are susceptible to interference and loss of signal, which would lead to a loss of control of the UAV. Operations on an aircraft carrier present specific problems with a high RF energy level on the deck of the carrier and with adverse weather potentially interfering with IR signals. One of the most significant problems with remote control of a UAV on a carrier deck is that precise steering of a UAV from a remote station is difficult. Precisely positioning a UAV on an aircraft carrier catapult would be very difficult with remote control systems, especially given the required degree of precision needed to engage the tow bar into the launch catapult shuttle.

In addition, if the UAV lands at any other location (e.g., an alternate base) where the ground control equipment is not available, the only way to move the UAV would be with a tow vehicle. Thus, although each of these prior art systems is workable, an improved solution that overcomes the limitations and problems associated with the prior art would be desirable.

[0006a] Reference is made to US-A-3,443,453 which discloses a coupling for rotary shafts for use in a nose gear steering system of an aircraft, which is controlled by a steering wheel located within the cockpit or cabin of the aircraft.

### SUMMARY OF THE INVENTION

Embodiments of a system, method, and apparatus for controlling an aircraft during non-flying operations are disclosed. The invention is well-suited for use with unmanned aerial vehicles. The aircraft is provided with a retractable ground operations control device that extends with the landing gear. Alternatively, the control device may be deployed from a separate bay on the aircraft. The control device may comprise a tiller that protrudes from the front of the aircraft or other location on the aircraft as dictated by the configuration of the aircraft. Ground crew use the control device to maneuver the aircraft for various ground-based operations.

The tiller provides left and right directional input to the steering of the nose wheel. The tiller also provides throttle and brake controls, such as a twist-grip handle on the tiller. The throttle and brake controls are spring-loaded to an engine idle and braked position. Separate brake functions also may be provided for additional braking control. The control device also includes various auxiliary controls for additional operations such as wing fold, tail hook extension and retraction, launch bar extension and retraction, etc. Other functions including engine start, engine shutdown, a vehicle system built in test and other functions and tests also may be provided on the control device.

The foregoing and other objects and advantages of the present invention will be apparent to those skilled in the art, in view of the following detailed description of the present invention, taken in conjunction with the appended claims and the accompanying drawings.

### BRIEF DESCRIPTION OF THE DRAWINGS

So that the manner in which the features and advantages of the present invention, which will become apparent, are attained and can be understood in more detail, more particular description of the invention briefly summarized above may be had by reference to the embodiments thereof that are illustrated in the appended drawings which form a part of this specification. It is to be noted, however, that the drawings illustrate only some embodiments of the invention and therefore are not to be considered limiting of its scope as the invention may admit to other equally effective embodiments.

FIG. 1 is a side view of one embodiment of an aircraft constructed in accordance with the present invention; and

FIG. 2 is a top view of one embodiment of a control device for the aircraft of FIG. 1 and is constructed in accordance with the present invention.

### DETAILED DESCRIPTION OF THE INVENTION

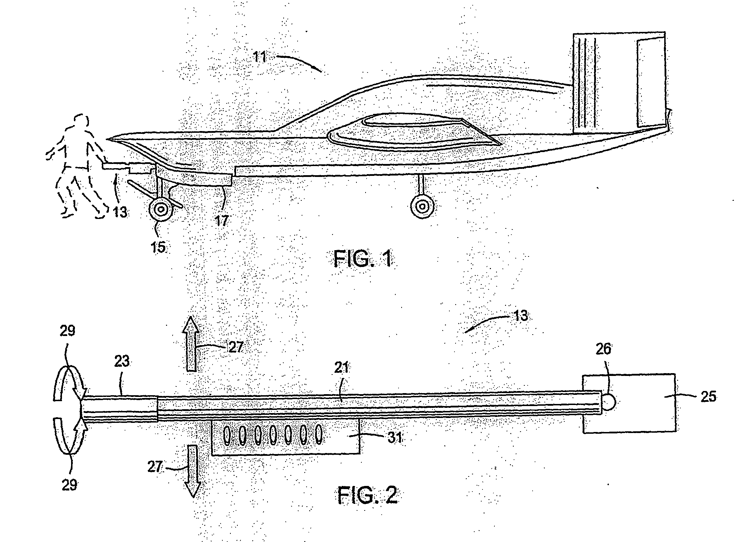

Referring to FIGS. 1 and 2, embodiments of a system, method, and apparatus for controlling an aircraft, such as an unmanned aerial vehicle (UAV) 11, during non-flying operations are disclosed. The UAV 11 is provided with a ground operations control device 13 that may be both retractable and mechanical, electrical or hydraulic, depending on the application. In one embodiment, the control device 13 is separate and independent from any other controls employed by the aircraft to control its operation during flight, The control device 13 may be extended with the landing gear 15 (e.g., nose landing gear or NLG), such as from the bay 17 of the NLG on the UAV 11, such that it is immediately deployable and usable during any non-flying operations (e.g., operations occurring on the ground at ground speeds of a walking speed or less).

The control device 13 may comprise a bar or tiller 21 (FIG. 2). In the embodiment shown, the tiller 21 protrudes from the front of the aircraft on or off of the centerline (e.g., in top view). In this position, a ground crewman may use the control device 13 to "lead" and control the UAV 11 for various ground-based operations. The tiller 21 may be attached to a steering control 25 (e.g., sensor, valve, etc.) via a pivot 26 that provides direct directional inputs (see, e,g., arrows 27, indicating left and right directions) to the steering of nose wheel 15 (FIG. 1) or differential braking of the main wheels.

The control device 13 also may be equipped with throttle and brake controls 23. In one embodiment, the throttle and brake controls 23 are combined in a single motorcycle-style, twis-grip handle on the tiller 21 (see, e.g., arrows 29, indicating clockwise and counter-clockwise rotation thereof). The throttle and brake controls 23 may be spring-loaded to an unbiased, engine idle position. Thus, release of the throttle 23 would return it to the engine idle position and activate the wheel brakes for the UAV 11. A separate brake handle also may be provided for separate and/or additional braking control (e.g., differential braking of left or right side brakes).

The control device 13 may further include various auxiliary controls 31 (e.g., switches). Such controls 31 may be provided for operations such as wing fold, tail hook extension and retraction, launch bar extension and retraction, etc. Other functions including engine start, engine shutdown, a vehicle system "built in test" (BIT) and other functions and tests also may be provided on the control device 13.

For aircraft carrier operations, the control device 13 may be extended with the landing gear 15, but would be inactive while the UAV 11 is in flight. On touchdown and after the UAV 11 has come to a stop following an arrested landing, a ground control crewman approaches the UAV 11 and activate the control device 13 to taxi the UAV 11 out of the landing zone. The control device 13 may be used to fold the wings of the UAV 11 at the same time. The steering, throttle, and brake functions on the control device 13 allow the crewman to accurately and precisely taxi the UAV 11 to its assigned parking spot and then shut down the engine.

For launch, the ground crewman may use the control device 13 to start the engine of the UAV 11 and perform BIT. The tiller 21 may then be used to taxi the UAV 11 to the catapult on the aircraft carrier. The throttle and brake controls 23 are used to move and stop the UAV 11 as required during taxi. The location of the tiller 21 and ground crewman on or near the centerline immediately in front of the NLG 15 makes it simple to walk the UAV 11 along the centerline of the catapult and position the NLG 15 in the correct position over the catapult shuttle. The auxiliary controls 31 on the tiller 21 also may be used to extend the launch bar to engage the catapult shuttle. After launch, the entire control device 13 may be retracted into either the NLG bay 17, or into a dedicated storage volume in the UAV 11.

The invention also may be incorporated into manned (i.e., piloted) aircraft for moving them on the ground or on a carrier deck in a similar manner as that described above for UAVs. Currently to reposition a parked manned aircraft on the ground, a crewman is put in the cockpit to operate the brakes and, in some cases, the steering while an external tow cart provides the motive force and steering by mechanically moving the nose wheel steering via the tow bar. Thus, the current method to move an aircraft on the ground without a pilot in the cockpit requires a minimum of two people and ground tow equipment.

In contrast, the invention allows a single person to move an unpiloted aircraft with no one in the cockpit (i.e., an "unmanned" manned aircraft) since brake, throttle, and steering control would be provided at the control device 13. The aircraft engine provides motive force instead of requiring a tug, and the crewman operates the control device. 13 to manage engine thrust and aircraft braking. As described above, the control device 13 may be in the NLG bay 17 of the aircraft or in a separate, dedicated bay. The invention is well suited for both military and commercial aircraft.

The invention also may be used to position unpiloted or piloted aircraft into the catapult shuttle on an aircraft carrier. This is a helpful advantage of the invention since, typically, pilots cannot see the catapult engagement point from the cockpit. Conventional systems for launching such piloted aircraft requires a ground crewman to communicate with the pilot in the cockpit via use hand signals to indicate distance and steering commands. With the control device 13 installed on a piloted aircraft, the ground crewman steers the aircraft into position while looking directly at the shuttle and launch bar. This design eliminates the possibility of misunderstood communications between ground crew and pilots.

The invention has numerous advantages as disclosed herein. For example, the controls are attached to directly to and cannot be separated from the aircraft. Thus, the controls are available for use by ground crew at any location or base at which the aircraft is located. The use of a hands-on tiller with throttle, brake, and steering functions on or near the centerline of the UAV enables the operator to work in close proximity to the UAV for precise guidance inputs. The operator also has a direct link to the controls and is not subject to RF or IR interference. The control device of the invention is set to return to a stopped position (e.g., the throttle moves to idle, and the brakes are applied) if the operator releases the control device.

The invention described also may be retrofitted to existing UAVs or manned aircraft in an externally mounted pod or package to enable ground control of those vehicles. The control bar would be retracted and stowed in such a pod when the vehicle is in flight, Suitable wiring and control interfaces would be incorporated into the vehicle to transmit signals from the control bar to the primary systems of the vehicle.

### THE FOLLOWING SETS OUT SOME EMBODIMENTS OF THE INVENTION

[0023a] According to the present invention there is provided an aircraft, comprising:
an aircraft body having flight controls for controlling flight operations of the aircraft; and
a ground operations control device mounted to the aircraft body for maneuvering the aircraft strictly during non-flying operations, such that the ground operations control device is separate and independent from the flight controls, and the ground operations control device is inactive during flight of the aircraft.

[0023b] The aircraft may contain one or more of the following features:-
(i) The ground operations control device is retractable.
(ii) The ground operations control device provides at least some direct mechanical control of the aircraft.
(iii) The ground operations control device is extended with the landing gear,
(iv) The ground operations control device extends and retracts with a nose landing gear, and is located in a bay of the nose landing gear during flight of the aircraft.
(v) The aircraft is an unmanned aerial vehicle.
(vi) The ground operations control device comprises a tiller that protrudes from a front portion of the aircraft body and is adjacent a centerline of the aircraft body.
(vii) The ground operations control device is attached to a steering control via a pivot that provides direct left and right directional inputs to a steering of a nose wheel of the aircraft.
(viii) The ground operations control device has throttle and brake controls comprising a combined, single motorcycle-style, twist-grip handle providing clockwise and counter-clockwise rotation for applying throttle and braking functions. The throttle and brake controls may be spring-loaded to an unbiased, engine idle position such that release of the throttle and brake controls return the aircraft to an engine idle position and activate wheel brakes of the aircraft.
(ix) The aircraft further comprises a separate brake handle for separate and additional braking control of the aircraft, including differential braking of left and right side brakes.
(x) The ground operations control device further comprises auxiliary controls for operations including wing fold, tail hook extension and retraction, launch bar extension and retraction, engine start, engine shutdown, and a vehicle system built in test (BIT).

[0023c] Also according to the present invention there is provided a method of manipulating an aircraft during non-flying operations comprising:
(a) providing an aircraft having flight controls for controlling flight operations of the aircraft, and ground operations controls for controlling non-flying operations of the aircraft;
(b) starting an engine of the aircraft via the ground operations controls;
(c) taxiing the aircraft into a launch position by controlling it with the ground operations controls;
(d) launching, flying and landing the aircraft by controlling it with flight controls; and then
(e) after the aircraft has landed, taxiing the aircraft to a parked position and shutting down the engine by controlling the aircraft with the ground operations controls.

[0023d] The method of the invention may include one or more of the following:-
(i) The ground controls are separate and independent from the flight controls, and the ground controls are inactive during flight of the aircraft.
(ii) During step (d), the ground operations controls are retracted into the aircraft after launch, and extended from the aircraft during landing.
(iii) Steps (c) and (e) comprise a crewman manually engaging the ground operations controls with a hand of the crewman to directly mechanically manipulate the ground operations controls.
(iv) The aircraft is an unmanned aerial vehicle.
(v) The ground operations controls comprise a tiller that protrudes from a front portion of the aircraft and is adjacent a centerline of the aircraft.
(vi) The ground operations controls are attached to a steering control via a pivot that provides direct left and right directional inputs to a steering of a nose wheel of the aircraft.
(vii) The ground operations controls have throttle and brake controls comprising a combined, single motorcycle-style, twist-grip handle providing clockwise and counter-clockwise rotation for applying throttle and braking functions. The throttle and brake controls may be spring-loaded to an unbiased, engine idle position such that release of the throttle and brake controls return the aircraft to an engine idle position and activate wheel brakes of the aircraft. A separate brake handle may be provided for separate and additional breaking control of the aircraft, including differential braking of left and right side brakes.
(ix) The ground operations controls further comprise auxiliary controls for operations including wing fold, tail hook extension and retraction, launch bar extension and retraction, engine start, engine shutdown, and a vehicle system built in test (BIT).

[0023e] The various optional features can, unless they are clearly alternatives be used in conjunction with one or more other optional features and optional features described in connection with one embodiment of the invention may be used in connection with other embodiments of the invention.

While the invention has been shown or described in only some of its forms, it should be apparent to those skilled in the art that it is not so limited, but is susceptible to various changes without departing from the scope of the invention. For example, although the invention has been described in conjunction with a UAV, it also may be used in conjunction with any type of aircraft (e,g., fixed wing, rotary wing, etc.) or other types of vehicles, devices or machinery (e.g., such as land-based vehicles or equipment, water-borne vessels or equipment that may require repositioning maneuvers.

## Claims

1. An aircraft (11), comprising:
an aircraft body having flight controls for controlling flight operations of the aircraft; and
a ground operations control device (13) mounted to the aircraft body to start an engine of the aircraft and to maneuver the aircraft strictly during non-flying operations, such that the ground operations control device is separate and independent from the flight controls, and the ground operations control device is inactive during flight of the aircraft.

2. An aircraft as claimed in claim 1, wherein the ground operations control device (13) is retractable.

3. An aircraft as claimed in claim 1 or 2, wherein the ground operations control device (13) provides at least some direct mechanical control of the aircraft.

4. An aircraft as claimed in any one of the preceding claims, wherein the ground operations control device (13) is extended with the landing gear (15), and the ground operations control device extends and retracts with a nose landing gear, and is located in a bay (17) of the nose landing gear during flight of the aircraft.

5. An aircraft as claimed in any one of the preceding claims, wherein the aircraft is an unmanned aerial vehicle.

6. An aircraft as claimed in any one of the preceding claims, wherein the ground operations control device (13) comprises a tiller (21) that protrudes from a front portion of the aircraft body and is adjacent a centerline of the aircraft body.

7. An aircraft as claimed in any one of the preceding claims, wherein the ground operations control device (13) is attached to a steering control (25) via a pivot (26) that provides direct left and right directional inputs (27) to a steering of a nose wheel (15) of the aircraft.

8. An aircraft as claimed in any one of the preceding claims, wherein the ground operations control device (13) has throttle and brake controls (23) comprising a combined, single motorcycle-style, twist-grip handle providing clockwise and counter-clockwise rotation (29) for applying throttle and braking functions, and the throttle and brake controls are spring-loaded to an unbiased, engine idle position such that release of the throttle and brake controls return the aircraft to an engine idle position and activate wheel brakes of the aircraft; and further comprising
a separate brake handle for separate and additional braking control of the aircraft, including differential braking of left and right side brakes.

9. An aircraft as claimed in any one of the preceding claims, wherein the ground operations control device (13) further comprises auxiliary controls (31) for operations including wing fold, tail hook extension and retraction, launch bar extension and retraction, engine shutdown, and a vehicle system built in test (BIT).

10. A method of manipulating an aircraft (11) during non-flying operations according to any of the preceding claims, comprising:
(a) providing an aircraft (11) having flight controls for controlling flight operations of the aircraft, and ground operations controls (13) for controlling non-flying operations of the aircraft;
(b) starting an engine of the aircraft via the ground operations controls (13);
(c) taxiing the aircraft into a launch position by controlling it with the ground operations controls;
(d) launching, flying and landing the aircraft by controlling it with flight controls; and then
(e) after the aircraft has landed, taxiing the aircraft to a parked position and shutting down the engine by controlling the aircraft with the ground operations controls.

## Patentansprüche

1. Flugzeug (11), das Folgendes umfasst:
einen Flugzeugrumpf mit Fluginstrumenten zum Steuern von Flugbewegungen des Flugzeugs; und
eine Bodenbewegungssteuervorrichtung (13), die am Flugzeugrumpf montiert ist, um ein Triebwerk des Flugzeugs zu starten und das Flugzeug bei nicht flugbezogenen Bewegungen genau zu manövrieren, so dass die Bodenbewegungssteuervorrichtung separat und unabhängig von den Fluginstrumenten ist und die Bodenbewegungssteuervorrichtung während des Flugs des Flugzeugs inaktiv ist.

2. Flugzeug nach Anspruch 1, wobei die Bodenbewegungssteuervorrichtung (13) einfahrbar ist.

3. Flugzeug nach Anspruch 1 oder 2, wobei die Bodenbewegungssteuervorrichtung (13) wenigstens ein gewisses Maß an direkter mechanischer Steuerung des Flugzeugs erlaubt.

4. Flugzeug nach einem der vorherigen Ansprüche, wobei die Bodenbewegungssteuervorrichtung (13) mit dem Fahrwerk (15) ausgefahren wird und die Bodenbewegungssteuervorrichtung mit einem Bugfahrwerk ein- und ausgefahren wird und sich während des Flugs des Flugzeugs in einer Bucht (17) des Bugfahrwerks befindet.

5. Flugzeug nach einem der vorherigen Ansprüche, wobei das Flugzeug eine Drohne ist.

6. Flugzeug nach einem der vorherigen Ansprüche, wobei die Bodenbewegungssteuervorrichtung (13) ein Ruder (21) umfasst, das von einem Frontteil des Flugzeugrumpfs vorsteht und sich neben einer Mittellinie des Flugzeugrumpfs befindet.

7. Flugzeug nach einem der vorherigen Ansprüche, wobei die Bodenbewegungssteuervorrichtung (13) über einen Drehzapfen (26), der direkte Links- und Rechtsrichtungseingaben (27) zum Lenken eines Bugrades (15) des Flugzeugs gibt, an einem Lenkinstrument (25) angebracht ist.

8. Flugzeug nach einem der vorherigen Ansprüche, wobei die Bodenbewegungssteuervorrichtung (13) Drossel- und Bremsinstrumente (23) aufweist, die einen einzigen kombinierten Drehgriff nach Art eines Motorrads für Links- und Rechtsdrehungen (29) zum Anwenden von Drossel- und Bremsfunktionen umfassen, und wobei die Drossel- und Bremsinstrumente federnd in eine neutrale Triebwerksleerlaufposition vorgespannt sind, so dass das Flugzeug durch Loslassen der Drossel- und Bremsinstrumente in eine Triebwerksleerlaufposition zurückgebracht wird und Radbremsen des Flugzeugs aktiviert werden; und das ferner Folgendes umfasst:
einen separaten Bremsgriff für eine separate und zusätzliche Bremssteuerung des Flugzeugs, einschließlich Differentialbremsung für linke und rechte Seitenbremsen.

9. Flugzeug nach einem der vorherigen Ansprüche, wobei die Bodenbewegungssteuervorrichtung (13) ferner Zusatzinstrumente (31) für Bewegungen wie Einklappen der Tragflächen, Ein- und Ausfahren des Fanghakens, Ein- und Ausfahren der Launch-Bar, Abschalten des Triebwerks und Fahrzeugssystem-BIT (Built In Test) umfasst.

10. Verfahren zum Manipulieren eines Flugzeugs (11) bei nicht flugbezogenen Bewegungen nach einem der vorherigen Ansprüche, das Folgendes beinhaltet:
(a) Bereitstellen eines Flugzeugs (11) mit Fluginstrumenten zum Steuern von Flugbewegungen des Flugzeugs und Bodenbewegungsinstrumenten (13) zum Steuern von nicht flugbezogenen Bewegungen des Flugzeugs;
(b) Starten eines Triebwerks des Flugzeugs über die Bodenbewegungsinstrumente (13);
(c) Rollenlassen des Flugzeugs in eine Startposition durch Steuern desselben mit den Bodenbewegungsinstrumenten;
(d) Starten, Fliegen und Landen des Flugzeugs durch Steuern desselben mit Fluginstrumenten; und dann
(e) Rollenlassen, nach dem Landen des Flugzeugs, des Flugzeugs in eine Parkposition und Abschalten des Triebwerks durch Steuern des Flugzeugs mit den Bodenbewegungsinstrumenten.

## Revendications

1. Aéronef (11), comportant :
un fuselage d'aéronef ayant des commandes de vol pour commander les opérations de vol de l'aéronef ; et
un dispositif de commande des opérations au sol (13) monté sur le fuselage de l'aéronef pour démarrer un moteur de l'aéronef et pour manoeuvrer l'aéronef uniquement lors des opérations de non-navigation aérienne, de telle sorte que le dispositif de commande des opérations au sol est séparé et indépendant par rapport aux commandes de vol, et le dispositif de commande des opérations au sol est inactif en cours de vol de l'aéronef.

2. Aéronef selon la revendication 1, dans lequel le dispositif de commande des opérations au sol (13) est escamotable.

3. Aéronef selon la revendication 1 ou la revendication 2, dans lequel le dispositif de commande des opérations au sol (13) fournit au moins une certaine commande mécanique directe de l'aéronef.

4. Aéronef selon l'une quelconque des revendications précédentes, dans lequel le dispositif de commande des opérations au sol (13) est étendu par rapport au train d'atterrissage (15), et le dispositif de commande des opérations au sol s'étend et se rétracte par rapport à un train d'atterrissage avant, et se trouve dans un compartiment (17) du train d'atterrissage avant en cours de vol de l'aéronef.

5. Aéronef selon l'une quelconque des revendications précédentes, dans lequel l'aéronef est un véhicule aérien sans pilote.

6. Aéronef selon l'une quelconque des revendications précédentes, dans lequel le dispositif de commande des opérations au sol (13) comporte une barre (21) qui fait saillie en provenance d'une partie avant du fuselage de l'aéronef et qui est adjacente par rapport à un axe du fuselage de l'aéronef.

7. Aéronef selon l'une quelconque des revendications précédentes, dans lequel le dispositif de commande des opérations au sol (13) est attaché à une commande de direction (25) par le biais d'un pivot (26) qui fournit des entrées directes de direction côté gauche et côté droit (27) à une commande d'orientation d'une roue avant (15) de l'aéronef.

8. Aéronef selon l'une quelconque des revendications précédentes, dans lequel le dispositif de commande des opérations au sol (13) a des commandes des gaz et de frein (23) comportant une seule poignée combinée tournante de type motocycle procurant une rotation dans le sens des aiguilles d'une montre et dans le sens inverse des aiguilles d'une montre (29) à des fins de mise en oeuvre des fonctions des gaz et de frein, et les commandes des gaz et de frein sont à ressort jusque sur une position non sollicitée de ralenti de moteur de telle sorte que la libération des commandes des gaz et de frein remet l'aéronef sur une position de ralenti de moteur et actionne les freins des roues de l'aéronef ; et comportant par ailleurs
une poignée de freinage séparée pour une commande de freinage séparée et supplémentaire de l'aéronef, comprenant le freinage différentiel des freins côté gauche et côté droit.

9. Aéronef selon l'une quelconque des revendications précédentes, dans lequel le dispositif de commande des opérations au sol (13) comporte par ailleurs des commandes auxiliaires (31) pour des opérations comprenant le repliement de voilure, l'extension et la rétraction de la crosse d'appontage, l'extension et la rétraction de la barre de lancement, l'arrêt des moteurs, et un dispositif d'essai intégré (BIT) du système du véhicule.

10. Procédé de manipulation d'un aéronef (11) pendant des opérations de non-navigation aérienne selon l'une quelconque des revendications précédentes, comportant les étapes consistant à :
(a) mettre en oeuvre un aéronef (11) ayant des commandes de vol pour commander les opérations de vol de l'aéronef, et des commandes des opérations au sol (13) pour commander des opérations de non-navigation aérienne de l'aéronef ;
(b) démarrer un moteur de l'aéronef par le biais des commandes des opérations au sol (13) ;
(c) faire rouler l'aéronef au sol jusque sur une position de lancement en le commandant par le biais des commandes des opérations au sol ;
(d) lancer, faire voler et faire atterrir l'aéronef en le commandant par le biais des commandes de vol ; et puis
(e) une fois que l'aéronef a atterri, faire rouler l'aéronef au sol jusque sur une position de stationnement et arrêter le moteur en commandant l'aéronef par le biais des commandes des opérations au sol.
